# EUROPEAN PATENT APPLICATION

(11) **EP 4 775 547 A1**
(43) Date of publication of application: **15.07.2026**
(21) Application number: 25225096.4
(22) Date of filing: 18.12.2025
(51) Int. Cl.: C02F 1/00, C02F 1/463, C02F 9/00, C02F 1/44, C02F 101/20, C02F 103/02

(54) **STEEL MAKING PLANT WITH A DIRECT COOLING WATER TREATMENT CIRCUIT AND PROCESS FOR TREATING DIRECT COOLING WATER IN A STEEL MAKING PLANT**

(30) Priority: 08.01.2025 IT 202500000180
(71) Applicant: Paul Wurth Italia S.p.A., 16149 Genova (IT)
(72) Inventor: GRADINAC, Jovana, I-16149 GENOVA (IT); PONS, Alessandro, I-16149 GENOVA (IT); PERATO, Marco, I-16149 GENOVA (IT)
(74) Representative: Zanettin, Gianluigi

(57) **Abstract**

The present invention relates to a steel making plant (1) comprising:- at least one apparatus (10) provided with a direct water cooling system (11) which generates a cooling water flow (CW) containing dissolved solids; - a cooling water treatment circuit (100) which is fluidically connected to said direct water cooling system (11) and is suitable to treat said cooling water flow (CW) so as to recirculate to said direct cooling system (11) a recirculating water flow (RW) having a concentration of said dissolved solids below a predefined limit. Said circuit (100) in turn comprises at least one mechanical separation unit (110, 130, 1100) suitable to separate the solids contained in the cooling water flow (CW), generating a sludge flow (S);
- a cooling unit (120) which is fluidically connected to said direct water cooling system (11) by means of a return conduit (101b) which closes the circuit as a loop.
- The cooling water treatment circuit (100) further comprises at least one electrocoagulation system (1000) which is suitable to treat at least a part of said cooling water flow (CW) so as to facilitate the separation of said dissolved solids from the water in the form of flocs and/or clots separable by said at least one mechanical separation unit (110, 130, 1100), thereby lowering the concentration of dissolved solids in the cooling water flow (CW).

## Description

### Field of application

The present invention relates to a steel making plant with a direct cooling water treatment circuit and to a process for treating direct cooling water in a steel making plant.

### State of the art

In steel making plants (including steelworks, rolling mills, foundries, DRI (Direct Reduced Iron) plants and blast furnaces), water is used to cool various components and utilities within the plant by means of direct and indirect cooling circuits.

Water is conditioned with chemical additives and physical processes to ensure that it remains clean and non-corrosive. Operating conditions of these plants typically range from 25°C to 80°C.

Due to the evaporation of water during the cooling process (cooling tower, direct cooling of steel products, etc.), the conductivity of the water continuously increases. This occurs as a result of the increase in the concentration of TDS (Total Dissolved Solids) in the circuit.

This problem is usually solved by discharging a quantity of concentrated water by means of blowdown, which is then replenished with make-up water generally taken from the plant water mains or produced by a reverse osmosis system (RO, Reverse Osmosis) or similar applications.

For this purpose, steel making plants are provided with cooling water treatment circuits.

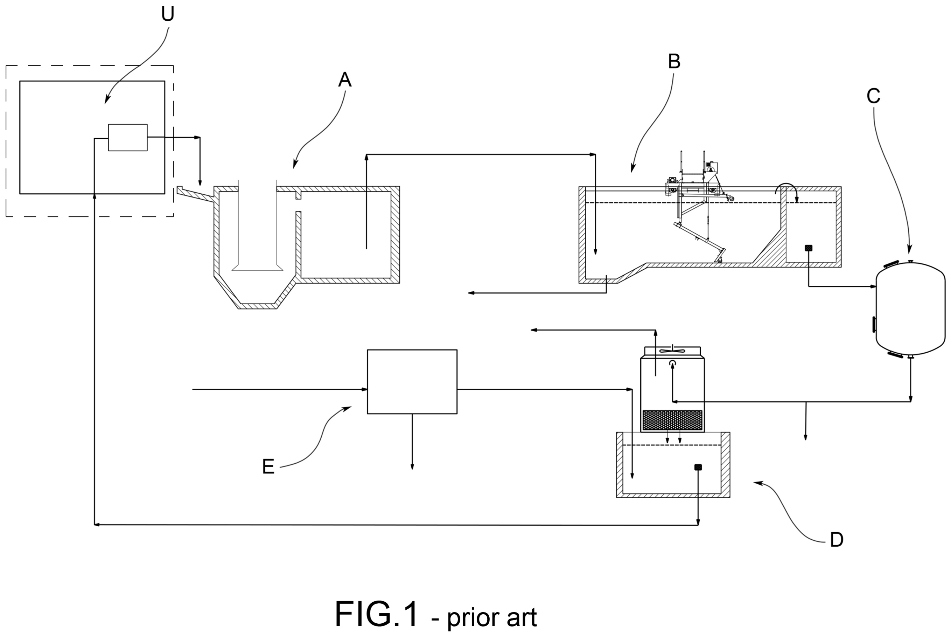

An example of a water treatment circuit is illustrated in Figure 1. The circuit sequentially comprises a scale pit A which receives the cooling water from one or more utilities U of the steel making plant. Downstream there is a longitudinal sedimentation basin B from which the outgoing water passes through a sand filter C and is then cooled in an evaporative tower D. From the cooled water collection basin of the evaporative tower D, the water is then recirculated to the utilities U. Water lost through evaporation and in the sludge is replenished in the collection basin of the evaporative tower, having been previously treated by a reverse osmosis apparatus E. Withdrawal of a concentrated water flow (blowdown) is carried out between the sand filter C and the evaporative tower D.

The solution described above has a high impact on operating costs for wastewater treatment and for the production of new make-up water.

There is therefore a strongly felt need to improve the efficiency and sustainability of the cooling water treatment process in iron and steel production plants.

The solutions of the known art currently available essentially envisage treating the blowdown flow externally to the cooling circuit by subjecting it to suitable processes. In particular, the blowdown flow may be subjected to electrocoagulation.

A first example is described in CN 110894116 A relating to a complex machine integrating electrocoagulation and filtration in a single unit.

Similar solutions are described in US 2020/095150 A1 and US 2010/219082 A1.

These technical solutions-although operationally functional-do not, however, make it possible to avoid blowdown.

### Summary of the invention

Therefore, the main aim of the present invention is to wholly or partly eliminate the drawbacks of the above-mentioned prior art, by providing a steel making plant with a direct cooling water treatment circuit which allows the water to be treated more efficiently by reducing the dissolved solids (TDS) and at the same time minimizing or eliminating the discharge of water (blowdown).

A further aim of the present invention is to provide a steel making plant with a direct cooling water treatment circuit which is simple and inexpensive to manufacture.

A further aim of the present invention is to provide a steel making plant with a direct cooling water treatment circuit which is simple and easy to manage.

A further aim of the present invention is to provide a process for treating direct cooling water in a steel making plant which allows the water to be treated more efficiently by reducing the dissolved solids (TDS) and at the same time minimizing or eliminating the discharge of water (blowdown).

### Brief description of the drawings

The technical features of the invention, according to the above-mentioned aims, are clearly apparent from the content of the claims reported below and the advantages thereof will become more evident from the detailed description that follows, made with reference to the accompanying drawings, which illustrate one or more purely exemplary and non-limiting embodiments thereof, in which:
- Figure 1 shows a simplified diagram of a steel making plant with a direct cooling water treatment circuit of a known type;
- Figures 2 to 10 show nine different simplified diagrams of a steel making plant with a direct cooling water treatment circuit according to nine different alternative embodiments of the invention;
- Figure 11 shows the diagram of Figure 1 with the flow rate and conductivity values indicated for each flow present in the water treatment circuit;
- Figure 12 shows the diagram of Figure 10 relating to a plant according to a preferred embodiment of the invention which also exploits reverse osmosis to reduce the dissolved solids that cannot be reduced by electrocoagulation, flow rate and conductivity values being indicated for each flow present in the water treatment circuit; and
- Figure 13 shows a diagram similar to that of Figure 10 relating to a plant according to an alternative embodiment of the invention which does not exploit reverse osmosis to reduce the dissolved solids that cannot be reduced by electrocoagulation, flow rate and conductivity values being indicated for each flow present in the water treatment circuit.

### Detailed description

The steel making plant with a direct cooling water treatment circuit according to the invention is generally indicated with reference numeral 1 in the accompanying Figures, while the corresponding direct cooling water treatment circuit is indicated with reference numeral 100.

Here and in the following description and claims, reference will be made to the plant 1 in operating conditions. In this sense, any references to a direction of circulation of the cooling water flow are to be understood accordingly.

The steel making plant 1 may be of any type provided that it comprises an apparatus 10 requiring direct cooling. In particular, the steel making plant 1 may be a steelworks, a rolling mill, a foundry, a DRI (Direct Reduced Iron) plant or a blast furnace.

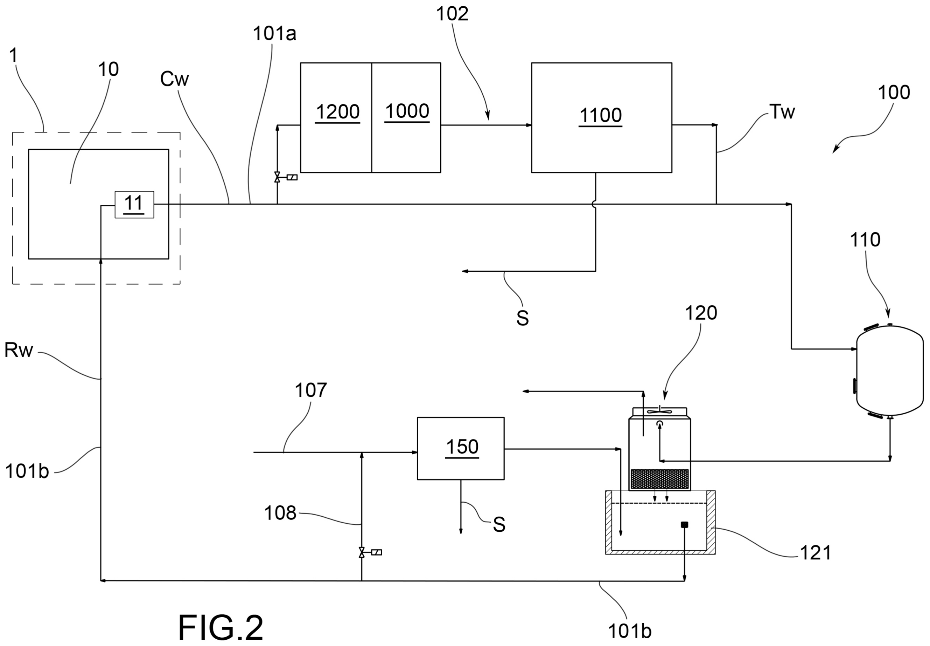

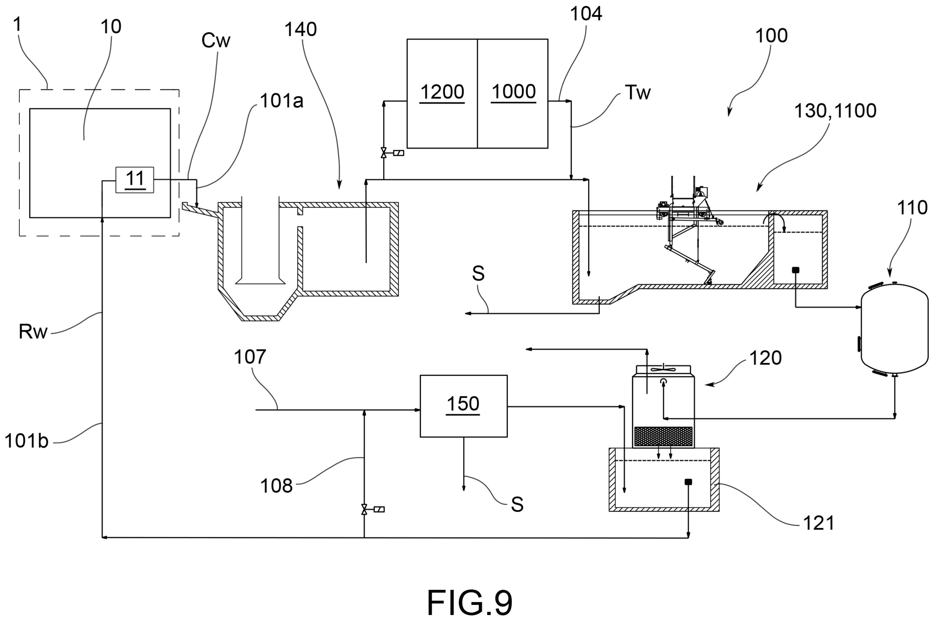

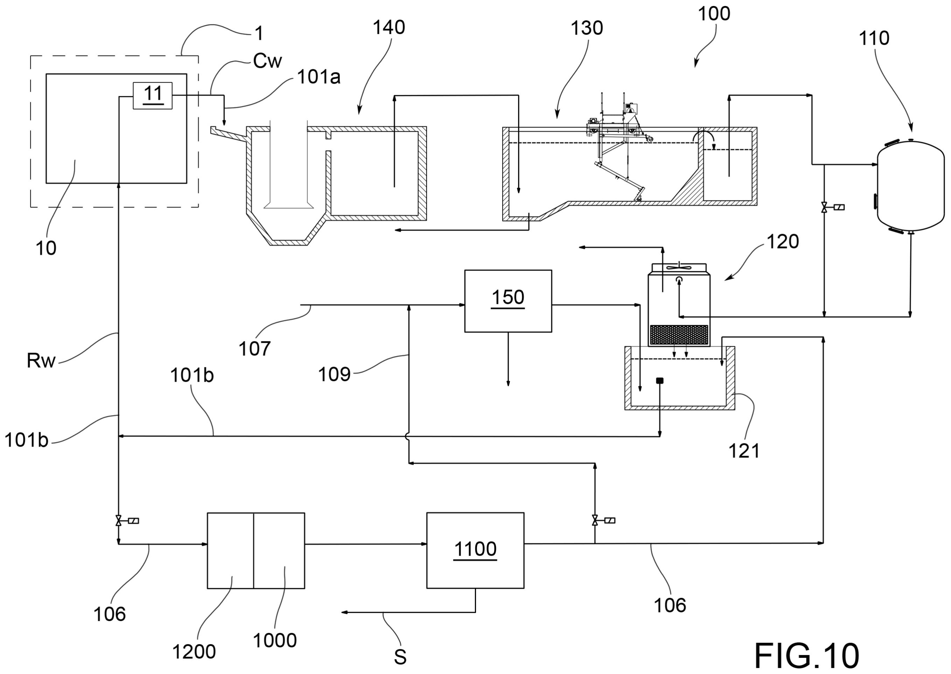

According to a general embodiment of the invention, as illustrated in Figures 2 to 10, the steel making plant 1 comprises at least one apparatus 10 provided with a direct water cooling system 11 which generates a cooling water flow CW containing dissolved solids, originating from the apparatus 10 subjected to direct cooling by direct contact with said water flow.

By dissolved solids are meant all elements and compounds that are present in ionic form or in molecular form dissolved in the water flow. This includes both salts that dissociate into ions (such as chlorides, sulfates, etc.) and other chemical species that remain dissolved without completely dissociating.

More in detail, depending on the type of apparatus 10 subjected to direct cooling, the cooling water flow CW may contain - in addition to dissolved solids - also:
- suspended solids (iron oxides, sand, organic material, process sediments);
- scale/flakes or coarser material (iron oxides) .

The steel making plant 1 further comprises a cooling water CW treatment circuit 100 which is fluidically connected to said direct water cooling system 11 and is suitable to treat said cooling water flow CW so as to recirculate to said direct cooling system 11 a recirculating water flow RW having a concentration of said dissolved solids below a predefined limit.

Preferably, said predefined concentration limit is correlated to a water conductivity value (expressed in pS) and is easily detectable by means of conductivity meters. Said value is set so as to avoid the onset of corrosive phenomena.

The cooling water treatment circuit 100 in turn comprises:
- at least one mechanical separation unit 110, 130, 1100 suitable to separate the solids contained in the cooling water flow CW, generating a sludge flow S; and
- a cooling unit 120 which is fluidically connected to said direct water cooling system 11 by means of a return conduit 101b.

The return conduit 101b closes the treatment circuit 100 as a loop at the direct cooling system 11, from which the circuit 100 originates through a delivery conduit 101a.

From an operational standpoint, taking the direct cooling system 11 as a reference, the water flow flows through the circuit 100 via the delivery conduit 101a, passes through the plant components installed along the circuit and then returns to feed the cooling system 11 through the return conduit 101b. For this purpose, the treatment circuit 100 is provided with pumping means suitable to sustain water circulation therein. The direct cooling system 11 is provided with means for distributing the water onto the apparatus 10, as well as with a system for collecting the (heated) water leaving the apparatus 10 after cooling it.

Preferably, the cooling unit 120 consists of at least one evaporative tower, provided with at least one cooled water collection tank 121. The collection tank 121 is fluidically connected at the outlet to said direct water cooling system 11 by means of said return conduit 101b.

Alternatively, the cooling unit may consist of a heat exchanger or an air cooler. However, since the cooling water to be treated (and in particular to be cooled) is used for direct cooling and may carry suspended solids and scale, the use of an evaporative tower is preferable.

According to the invention, the cooling water treatment circuit 100 further comprises at least one electrocoagulation system 1000 which is suitable to treat at least part of said cooling water flow CW so as to facilitate the separation of said dissolved solids from the water in the form of flocs and/or clots separable by said at least one mechanical separation unit 110, 130, 1100, thereby lowering the concentration of dissolved solids in the cooling water flow CW.

From an operational standpoint, the electrocoagulation treatment makes it possible to remove a portion of the dissolved solids (Total Dissolved Solids, TDS) present in the water and thus counteract their continuous increase and the increase in conductivity.

Advantageously, the electrocoagulation unit 1000 is designed by taking into account the appropriate operating conditions correlated to the characteristics of the process water of various applications (such as hot rolling plants, strip and wire rod rolling mills, etc.). In particular, the design of the electrocoagulation unit 1000 is therefore adapted accordingly by defining the optimal number of electrodes, the required power, the electrode material, the distance between the electrodes, the flow rate, the retention time, and the like.

Thanks to the invention, the direct cooling water treatment circuit (by virtue of comprising an electrocoagulation unit) allows the water to be treated more efficiently by reducing at least part of the dissolved solids (TDS) and at the same time minimizing the discharge of water (blowdown).

The abatment of the TDS in fact makes it possible to keep the characteristics of the water constant and, in particular, to maintain its conductivity below a predefined maximum limit in order to prevent it from becoming corrosive.

The consequent reduction of the blowdown flow makes it possible both to mitigate the environmental impact of the steel making plant 1 and to reduce the disposal costs of the secondary products exiting the circuit 100.

Thanks to the invention, in addition to the reduced blowdown flow, the only non-reusable secondary product is a small amount of sludge. This sludge can be sent to a dewatering system and treated together with the rest of the material coming from the main process. The material originates from the various mechanical separations possibly present in the system (scale pit, longitudinal sedimentation basin and sand filters).

As will be clarified in the following description, if the circuit 100 envisages, as a treatment for removing dissolved solids, only the electrocoagulation unit, a blowdown flow will in any case be required, although with a flow rate significantly reduced compared to the traditional case.

In fact, the fraction of TDS not removed by the electrocoagulation treatment will tend to accumulate over time, requiring purging of the circuit and extraordinary replenishment of water.

The elimination of the blowdown flow is possible with a particular (and preferred) configuration of the treatment circuit 100, which will be described below.

The electrocoagulation unit, its operation and its sizing are per se known to a person skilled in the art and will therefore not be described in detail. In the present context, reference is limited to recalling some basic concepts.

Electrocoagulation exploits the anodic oxidation of iron (or a similar metal) to promote the removal of dissolved contaminants.

### Principle of Operation

### Structure of the electrocoagulation unit:

The electrocoagulation unit consists of an electrochemical cell with iron or similar metal electrodes (anode and cathode). The electrodes are immersed in the solution to be treated, in particular water containing contaminants.

### Electric current:

A direct current is applied through the electrodes. The iron anode (Fe) oxidizes, releasing iron ions (Fe²⁺ and Fe³⁺) into the solution.

### Formation of hydroxides:

Fe²⁺ or Fe³⁺ ions react with water and dissolved oxygen to form iron hydroxides, such as Fe(OH)₂ and Fe(OH)₃. These hydroxides are the effective coagulants that bind to the contaminants.

Fe²⁺ + 2OH → Fe(OH)₂

Fe³⁺ + 3OH → Fe(OH)₃

The Fe²⁺ ions may further oxidize to Fe³⁺ in the presence of dissolved oxygen: 4Fe²⁺ + O2 + 6H₂O → 4Fe³⁺ + 4OH⁻.

These Fe³⁺ ions form ferric hydroxides (Fe(OH)₃), which act as coagulants. Ferric hydroxides have a large specific surface area, promoting the adsorption and removal of suspended and dissolved contaminants.

### Agglomeration and flocculation:

The contaminants agglomerate around the ferric hydroxides forming flocs. These flocs, being larger and heavier, can be easily separated from the solution by sedimentation or flotation.

### Cathode reactions:

At the cathode, reduction reactions take place which may involve water, generating hydrogen gas. The hydrogen gas can assist in the flotation of the flocs toward the surface of the solution.

Electrocoagulation is therefore a process that combines physical and chemical principles in order to achieve the separation and removal of contaminants.

### Physical contribution

### Electrolytic flocculation:

During electrocoagulation, the electrodes (often made of materials such as iron and other metals) are immersed in the solution and an electric current is applied. This causes anodic oxidation of the metal, releasing metal ions into the solution.

The released metal ions combine with the impurities present in the solution to form flocs (particle aggregates). These flocs are larger and can be easily separated by sedimentation or filtration.

### Formation of gas bubbles:

The electrochemical reaction also produces gases (such as oxygen and hydrogen) at the electrodes. The gas bubbles adhere to the flocs and help them rise to the surface, facilitating removal by flotation.

### Chemical contribution

### Hydrolysis reactions:

The released metal ions (for example Fe²⁺, Fe³⁺, Al³⁺) undergo hydrolysis reactions forming metal hydroxides. These hydroxides have a high adsorption capacity and can trap and neutralize contaminants present in the solution.

### Charge neutralization:

Dissolved solids often carry electric charges that keep them suspended. The released metal ions neutralize these charges, reducing electrostatic repulsion forces and allowing the solids to aggregate and precipitate.

### Oxidation/reduction:

During electrocoagulation, oxidation and reduction reactions may occur which degrade or chemically alter dissolved organic and inorganic contaminants, making them less soluble or more easily removable.

According to a non-illustrated embodiment in the accompanying figures, the treatment circuit 100 may comprise a single mechanical separation unit defined by a mechanical filtration unit 110 (preferably a battery of sand filters). Said filtration unit is intended to remove from the flow suspended solid particles having a size greater than 20-50 micrometres (µm), so as to keep their concentration below the values required by the process.

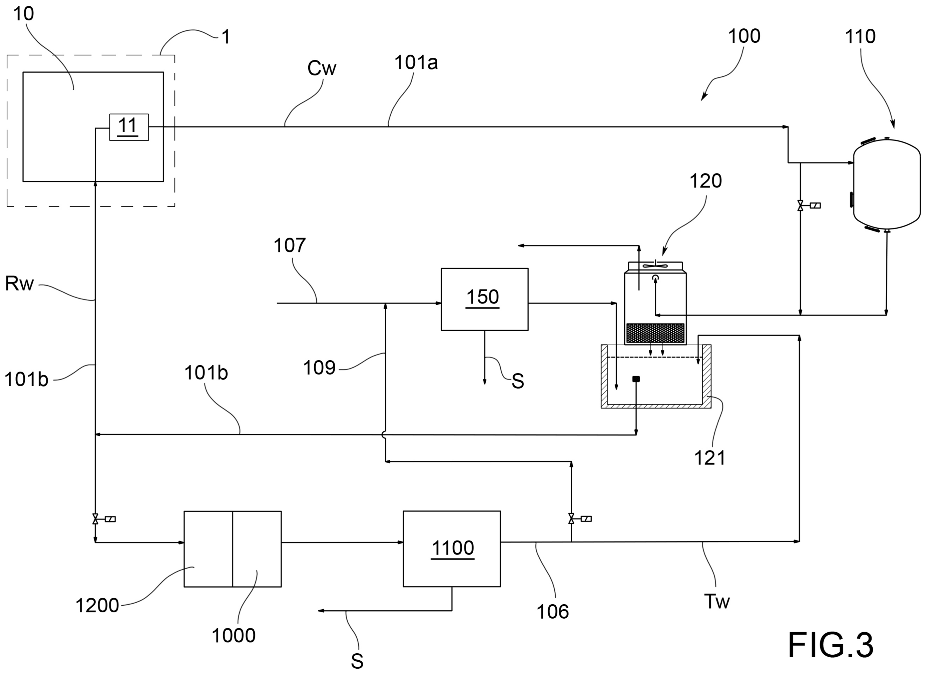

Advantageously, as illustrated in Figures 2 and 3, the cooling water treatment circuit 100 may not comprise sedimentation tanks for suspended solids.

Such a plant configuration may be adopted in the case in which the direct cooling does not remove high amounts of suspended solids from the products of the plant.

According to the two embodiments illustrated in Figures 2 and 3, the cooling water treatment circuit 100 may comprise two mechanical separation units 110, 1100.

More in detail, a first mechanical separation unit is defined by a mechanical filtration unit 110 (preferably a battery of sand filters) and is arranged downstream of said direct water cooling system 11.

A second mechanical separation unit is defined by a sedimentation unit 1100 suitable to treat the water flow exiting directly from said electrocoagulation system 1000 so as to generate, at the outlet, a sludge flow S (originating from the sedimentation of the dissolved solids induced to separate from the water as a result of the electrocoagulation treatment) and a treated water flow TW having a concentration of dissolved solids lower than that of the cooling water flow CW.

Said treated water flow TW defines, in whole or in part, the recirculating water flow RW, depending on the specific configuration of the circuit 100, as will be made clearer below.

Preferably, said cooling unit 120 is arranged downstream of said mechanical filtration unit 110.

According to the embodiment illustrated in Figure 2, said electrocoagulation system 1000 and said sedimentation unit 1100 may be installed in a by-pass branch 102 connected in parallel to a section of the treatment circuit 100 downstream of said direct water cooling system 11 and upstream of said mechanical filtration unit 110. Preferably, in this case the treatment circuit 100 comprises a water collection tank 1200 arranged immediately upstream of said electrocoagulation system 1000 and having a buffer function.

According to the embodiment illustrated in Figure 3, said electrocoagulation system 1000 and said sedimentation unit 1100 may be installed in a first recirculation branch 103 which fluidically connects said return conduit 101b at a point downstream of said cooling unit 120 and upstream of said direct water cooling system 11 to a more upstream point of the treatment circuit.

Preferably, as illustrated in Figure 3, the most upstream point to which said first recirculation branch 103 is connected is the cooled water collection tank 121 of the evaporative tower 120. In this manner, the electrocoagulation system 1000 treats a portion of the water flow exiting from said tank 121 and then recirculates it to the same tank.

Also in this case, preferably said treatment circuit 100 comprises a water collection tank 1200 arranged immediately upstream of said electrocoagulation system 1000 and having a buffer function.

Preferably, in the embodiments illustrated in Figures 2 and 3, the sedimentation unit 1100 is a lamella clarifier.

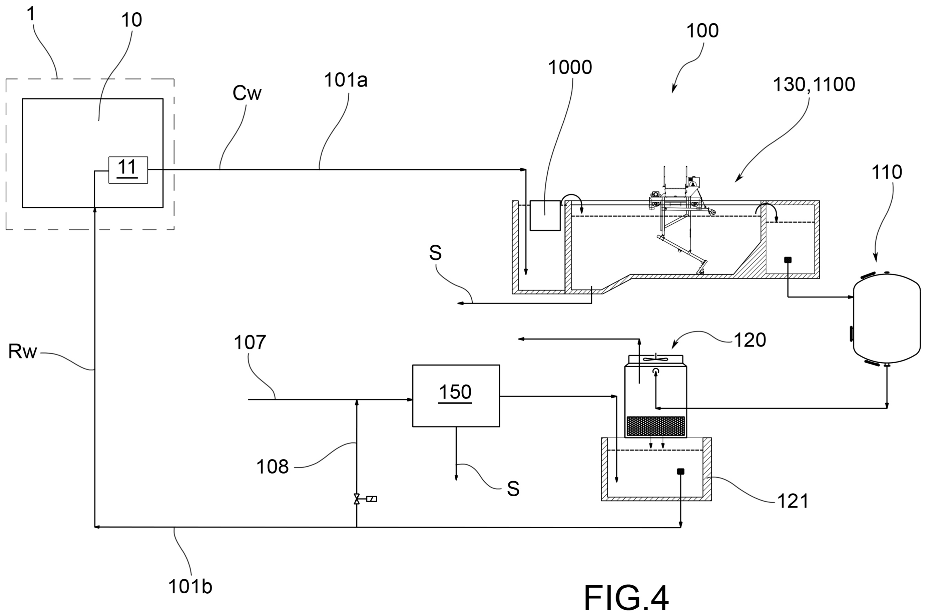

Advantageously, as illustrated in Figures 4 to 7, the cooling water treatment circuit 100 may comprise a sedimentation basin 130 which is installed downstream of said direct water cooling system 11 and preferably upstream of said mechanical filtration unit 110. Said sedimentation basin 130 (preferably of longitudinal type) is suitable to treat the cooling water flow CW in order to separate suspended solids from said flow.

Such a plant configuration may be adopted in the case of heat treatment plants. These plants are used for processes such as quenching, annealing, normalizing and the like, where there are no scales larger than 150 µm (micrometres).

Advantageously, said sedimentation basin 130 may be specifically intended to separate from the water flow the flocs and/or clots generated by the electrocoagulation treatment.

Advantageously, as illustrated in Figures 4 to 6, the cooling water treatment circuit 100 may therefore comprise two mechanical separation units 110, 130.

More in detail, a first mechanical separation unit is defined by a mechanical filtration unit 110 (preferably a battery of sand filters) and is arranged downstream of said direct water cooling system 11.

A second mechanical separation unit is defined by a sedimentation basin 130, preferably of longitudinal type, which is installed downstream of said direct water cooling system 11 and upstream of said mechanical filtration unit 110.

Said cooling unit 120 is arranged downstream of said mechanical filtration unit 110.

According to the embodiment illustrated in Figure 4, said electrocoagulation system 1000 may be connected in series to said cooling water treatment circuit 100 to treat the entire water flow circulating in said circuit, downstream of said direct water cooling system 11 and upstream of said sedimentation basin 130.

In this case, preferably, the electrocoagulation system 1000 is installed in an inlet section of said sedimentation basin 130.

Advantageously, said electrocoagulation system 1000 may be installed in a by-pass branch 104, 105 connected in parallel to said cooling water treatment circuit 100 in order to treat a predefined flow rate of the water circulating in said circuit.

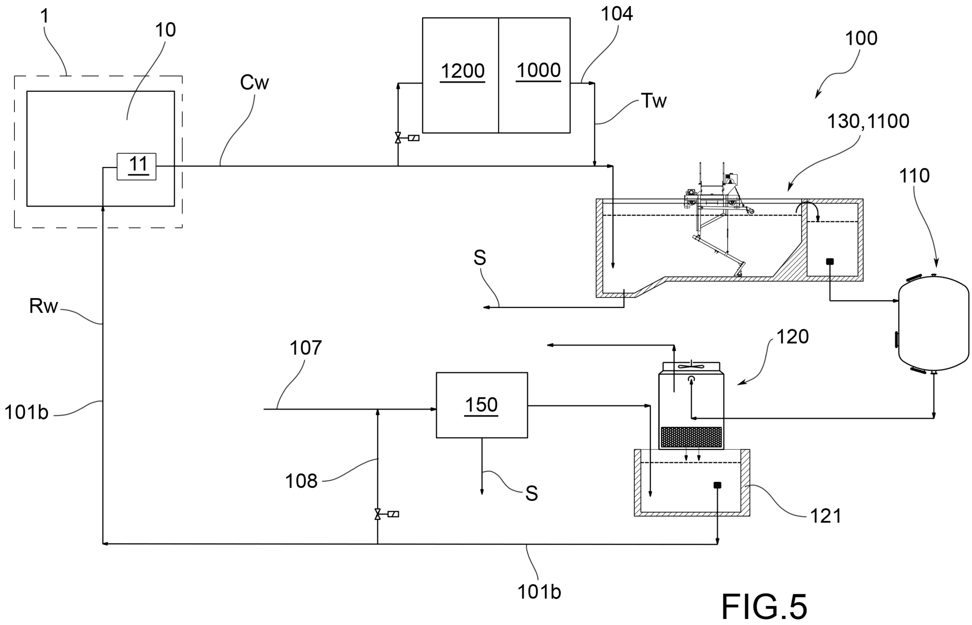

According to the embodiment illustrated in Figure 5, said by-pass branch 104 may be connected in parallel to a section of the circuit downstream of said direct water cooling system 11 and upstream of said sedimentation basin 130.

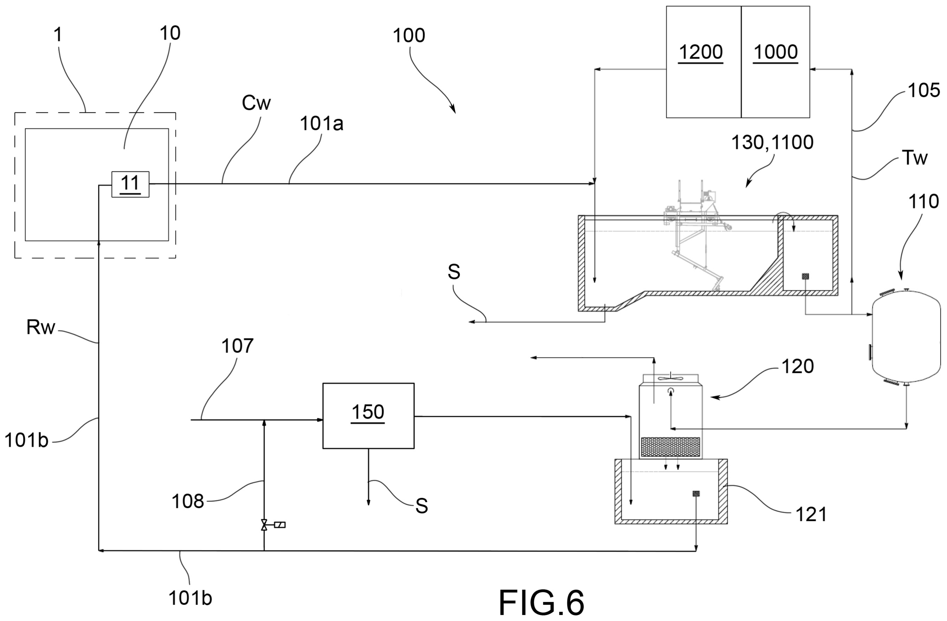

According to the embodiment illustrated in Figure 6, said by-pass branch 105 may be connected in parallel to said sedimentation basin 130 in order to treat a water flow exiting from said sedimentation basin 130 and recirculate it to the basin itself.

Preferably, when the electrocoagulation system 1000 is installed in a by-pass branch 104, 105, the treatment circuit 100 comprises a water collection tank 1200 arranged immediately upstream of said electrocoagulation system 1000 and having a buffer function for managing flow rate peaks/variations.

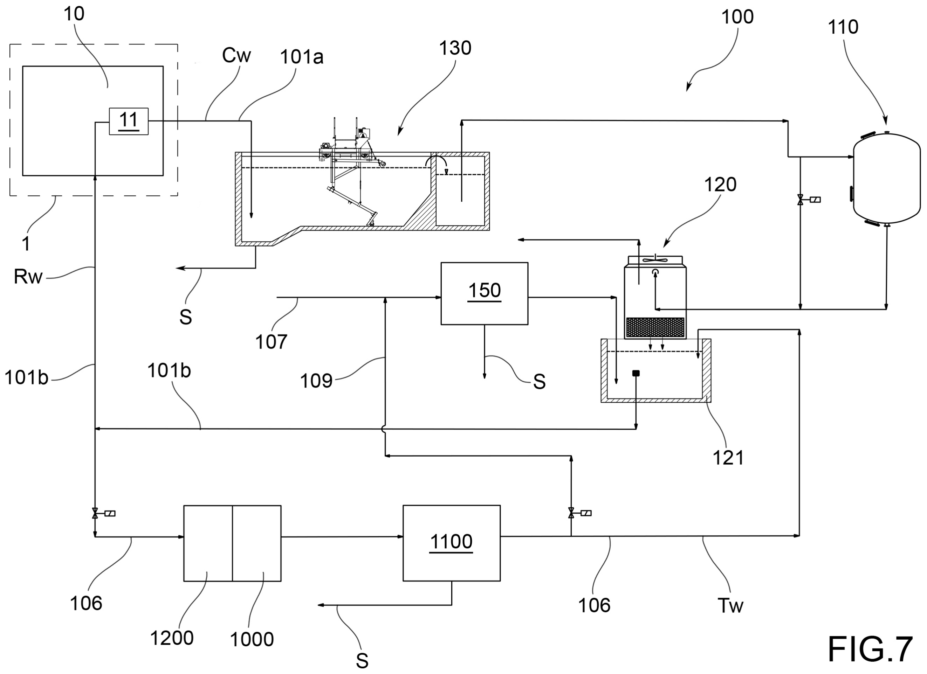

Advantageously, as illustrated in Figure 7, the cooling water treatment circuit 100 may comprise a mechanical separation unit which is specifically intended to separate from the water flow the flocs and/or clots generated by the electrocoagulation treatment and which is different from the above-mentioned sedimentation basin 130.

Advantageously, in this case, as illustrated in Figure 7, the cooling water treatment circuit 100 may comprise three mechanical separation units 110, 1100.

More in detail, a first mechanical separation unit is defined by a mechanical filtration unit 110 (preferably a battery of sand filters) and is arranged downstream of said direct water cooling system 11.

A second mechanical separation unit is defined by a sedimentation basin 130, preferably of longitudinal type, which is installed downstream of said direct water cooling system 11 and upstream of said mechanical filtration unit 110.

A third mechanical separation unit is defined by a sedimentation unit 1100 suitable to treat the water flow exiting directly from said electrocoagulation system 1000 so as to generate, at the outlet, a sludge flow S and a treated water flow TW having a concentration of dissolved solids lower than that of the cooling water flow CW, said treated water flow TW partially defining said recirculating water flow RW.

Said cooling unit 120 is arranged downstream of said mechanical filtration unit 110.

In particular, as illustrated in Figure 7, the electrocoagulation system 1000 and the sedimentation unit 1100 may be installed in a first recirculation branch 106 which fluidically connects said return conduit 101b at a point downstream of said cooling unit 120 and upstream of said direct water cooling system 11 to a more upstream point of the treatment circuit.

Preferably, as illustrated in Figure 7, the most upstream point to which said first recirculation branch 106 is connected is the cooled water collection tank 121 of the evaporative tower 120. In this manner, the electrocoagulation system 1000 treats a portion of the water flow exiting from said tank 121 and then recirculates it to the same tank.

Also in this case, preferably said treatment circuit 100 comprises a water collection tank 1200 arranged immediately upstream of said electrocoagulation system 1000 and having a buffer function.

Preferably, in the embodiments illustrated in Figures 2, 3 and 7, the sedimentation unit 1100 is a lamella clarifier.

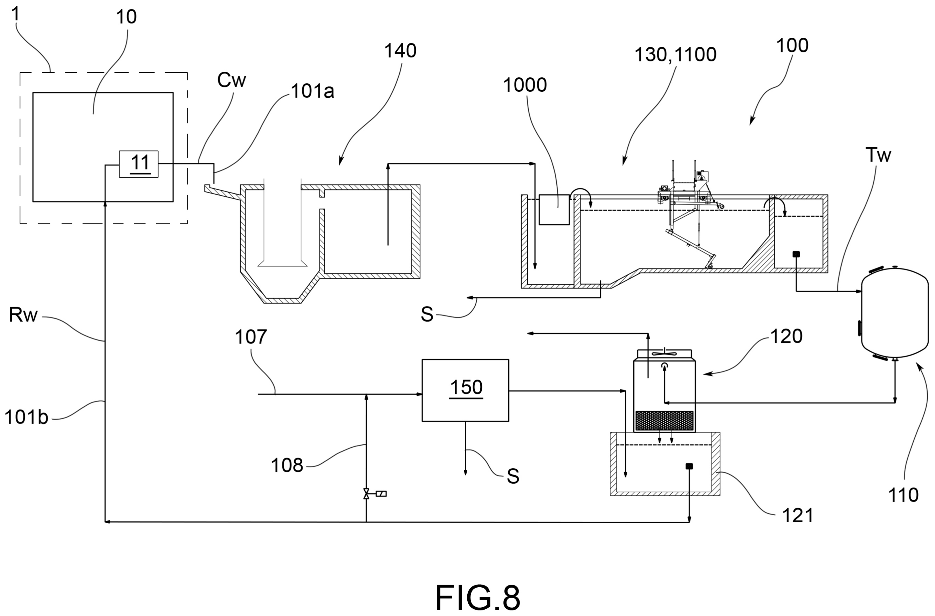

Advantageously, as illustrated in Figures 8 to 10, the cooling water treatment circuit 100 may comprise - in addition to a sedimentation basin 130 (installed downstream of said direct water cooling system 11 and upstream of said mechanical filtration unit 110) - a scale sedimentation tank 140 which is installed downstream of said direct water cooling system 11 and upstream of both said longitudinal sedimentation basin 130 and said electrocoagulation system 1000.

Said scale sedimentation tank 140 is suitable to treat the cooling water flow CW in order to separate from said flow suspended solids having dimensions greater than 150 µm.

Such a plant configuration may be adopted in the case of rolling plants, continuous casting plants, reheating furnaces or pickling plants, or in those cases in which the scale has dimensions greater than 150 µm.

The embodiments illustrated in Figures 8, 9 and 10 overlap with the embodiments illustrated respectively in Figures 4, 5 and 7, having only the additional scale sedimentation tank 140.

Advantageously, as illustrated in the accompanying figures, said treatment circuit 100 comprises:
- a water replenishment conduit 107 fluidically connected to a water mains; and
- a reverse osmosis treatment unit 150 which is fluidically connected to said water replenishment conduit 107.

Preferably, the water replenishment conduit 107 is fluidically connected to the cooled water collection tank 121 of said evaporative tower 120.

The reverse osmosis treatment unit 150, its operation and its sizing are per se known to a person skilled in the art and will therefore not be described in detail. In the present context, it is sufficient to recall that reverse osmosis allows the separation from the flow of dissolved solids that cannot be reduced by electrocoagulation.

Advantageously, as illustrated in Figures 2, 4, 5, 8 and 9, the return conduit 101b may be connected to said water replenishment conduit 107 upstream of said reverse osmosis treatment unit 150 by means of a recirculation branch 108. In this manner, a portion of the treated water flow TW (previously subjected upstream to electrocoagulation treatment) may be subjected to a reverse osmosis treatment which allows the removal of dissolved solids not removed by electrocoagulation. This makes it possible to eliminate the water purge (blowdown) flow.

Advantageously, alternatively, as illustrated in Figures 3, 6, 7 and 10, which envisage the installation of the electrocoagulation system 1000 in a first recirculation branch 103, 106 suitable to recirculate a water flow from the return conduit 101b to the collection tank 121 of the evaporative tower 120, downstream of said electrocoagulation system 1000 and of said sedimentation unit 1100, said first recirculation branch 103, 106 may be connected, by means of a second recirculation branch 109, to said water replenishment conduit 107 upstream of said reverse osmosis treatment unit 150. Operationally, in this manner, it is possible to treat by reverse osmosis at least a portion of the water flow exiting from said electrocoagulation system 1000 and from said sedimentation unit 1100 and to recirculate it into the treatment circuit 100.

Also in this case, a portion of the treated water flow TW (previously subjected upstream to electrocoagulation treatment) may be subjected to a reverse osmosis treatment which allows the removal of dissolved solids not removed by electrocoagulation. This makes it possible to eliminate the water purge (blowdown) flow.

Advantageously, as illustrated in Figures 3, 7 and 10, the mechanical filtration unit 110 may be installed in a by-pass branch 111 which is connected in parallel to the treatment circuit 100 in a section of the treatment circuit 100 downstream of said direct water cooling system 11 and upstream of said cooling unit 120.

From an operational standpoint, thanks to the by-pass in plant solutions which envisage electrocoagulation downstream of the mechanical filtration unit 110, it is possible to modulate the action of filtering suspended solids. In fact, it has been found that, within certain limits, the presence of suspended solids may promote the action of reducing dissolved solids induced by electrocoagulation.

Advantageously, the insertion of a lamella clarifier downstream of the electrocoagulation unit EC makes it possible to send the water treated by EC directly to the reverse osmosis system (see Figures 3, 7 and 10). This may be useful and necessary if compounds harmful to reverse osmosis membranes are present in the water. In this way, such compounds can be removed by electrocoagulation.

Furthermore, the fact that sludge sedimentation is separated from the primary circuit makes it possible to avoid contaminating the plant sludge with elements that could be precipitated exclusively by electrocoagulation.

This possibility will be evaluated in the event that, for process reasons, the water is contaminated by elements that are usually not present in steel making plants.

The present invention also relates to a process for treating direct cooling water in a steel making plant 1 comprising at least one apparatus 10 provided with a direct water cooling system 11 which generates a cooling water flow containing dissolved solids.

In particular, such a process may be implemented by means of the treatment circuit 100 with which the steel making plant 1 according to the invention is provided, in particular as described above.

More in detail, the process comprises the following operating steps:
a) treating said cooling water flow in a cooling water treatment circuit 100 to lower the concentration of said dissolved solids below a predefined limit, generating a treated water flow TW; and
b) recirculating said treated water flow TW to said direct water cooling system 11.

According to the invention, said treatment step a) envisages that at least one part of said cooling water flow CW is subjected to an electrocoagulation treatment so as to facilitate the separation of said dissolved solids from the water.

Said treatment step a) further envisages that the water flow is subjected to sedimentation to allow the dissolved solids being separated from the water to be removed from the water flow itself, thereby lowering the concentration of dissolved solids in the water and reducing the need to purge the treatment circuit by extracting a blowdown flow from the circuit.

Preferably, said treatment step a) envisages that before or after the electrocoagulation treatment, said cooling water flow is subjected to:
- mechanical filtration, preferably by means of a sand filter; and
- cooling, preferably by means of an evaporative tower.

Advantageously, said treatment step a) may further envisage that before or after the electrocoagulation treatment, said cooling water flow is subjected to sedimentation in order to allow the separation of suspended solids.

Advantageously, said treatment step a) may further envisage that before the electrocoagulation treatment, said cooling water flow is subjected to sedimentation in order to also allow the separation of coarse suspended solids.

Preferably, said treatment step a) envisages that at least one part of the water flow subjected to the electrocoagulation treatment is subjected to a reverse osmosis treatment, thereby substantially eliminating the concentration of dissolved solids from the water and avoiding the need to purge the treatment circuit, that is, eliminating the blowdown flow.

### Application and comparative example

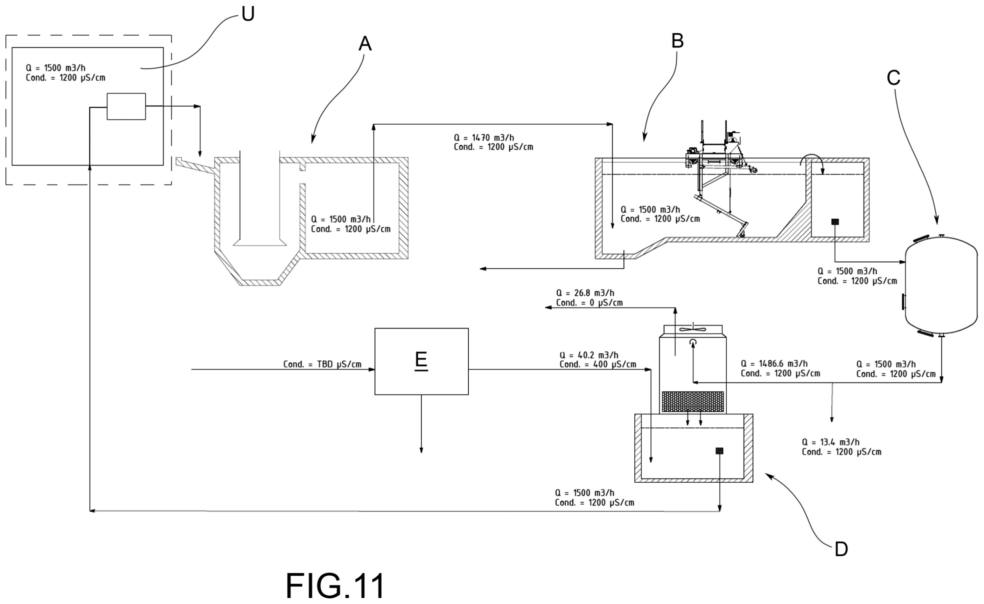

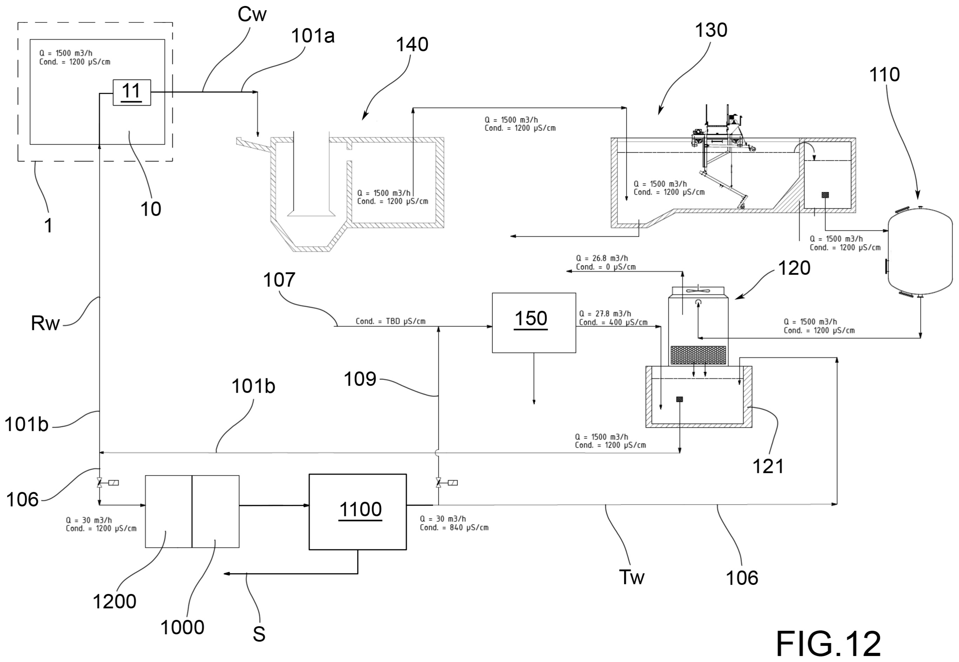

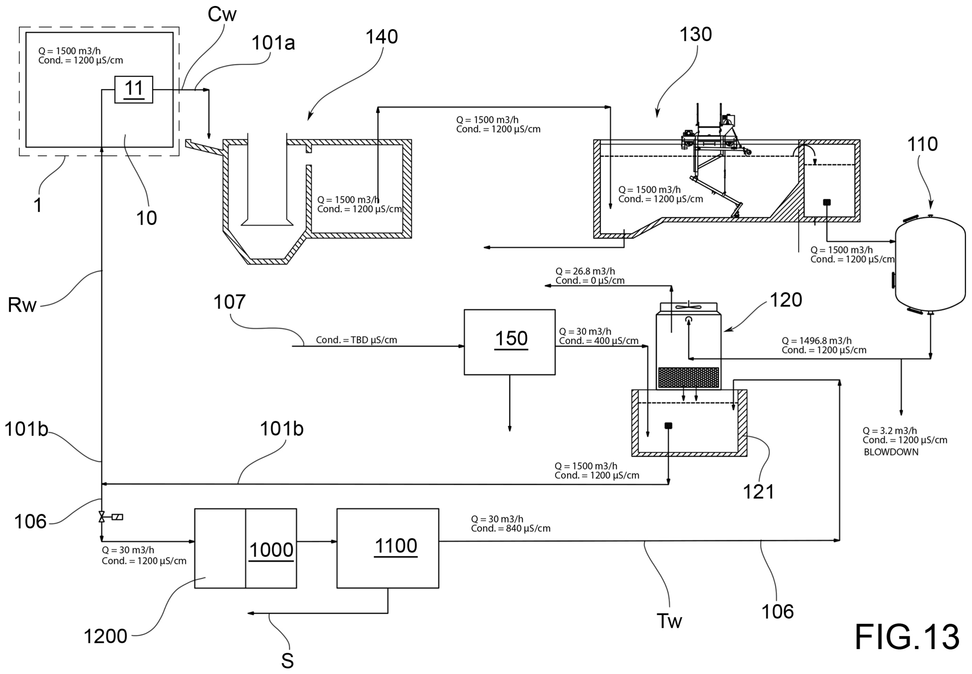

A plant of a known type as illustrated in Figures 1 and 11 has been compared with two plants according to the invention, wherein:
- a first plant (shown in Figure 12) exploits reverse osmosis to reduce the dissolved solids that cannot be treated by electrocoagulation; and
- a second plant (shown in Figure 13) which, differently, does not exploit reverse osmosis to reduce the dissolved solids that cannot be treated by electrocoagulation.

In order to make the comparison among the three plants homogeneous, it was assumed that the same cooling water flow rate (1,500 m³/h) was treated with the same maximum conductivity value (1,200 µS/cm). The data reported in Figures 11-13 refer to operating conditions of a case study relating to a situation considered to be more representative. The plants may, however, also operate with lower or higher conductivity values; in such a case, the circulating flow rates and, in general, the process conditions will vary.

In the comparison, the operating conditions (environmental characteristics and upstream process conditions) were also kept identical; moreover, the plants are provided with the same plant equipment, with the sole exception that the two plants according to the invention are both equipped with an electrocoagulation system and the plant of Figure 12 also exploits reverse osmosis to treat the cooling water, in addition to treating the make-up water as in the plants of Figures 11 and 13.

As can be observed from a comparison between Figures 11 and 13, the use of the electrocoagulation system makes it possible to reduce the blowdown flow rate from a value of 13.4 m³/h with a conductivity of 1,200 µS/cm to a value of 3.2 m³/h with the same conductivity. By also exploiting reverse osmosis in addition to the electrocoagulation system, the blowdown can be eliminated, as illustrated in Figure 12.

The quantity of water additionally extracted from the system with the sludge generated in the mechanical filtration processes due to the contribution of electrocoagulation is substantially negligible and, in any case, of an amount absolutely not comparable with the benefit obtained in terms of reduction (or even elimination) of the blowdown.

The two plants according to the invention treat by electrocoagulation only a portion of the cooling water flow rate (in the example about 2%, 30 m³/h). This value should not be considered as limiting, also because it is possible to envisage treating the entire flow rate by electrocoagulation (see Figure 4, by adapting the operating parameters of the electrocoagulation to the treated flow rate).

In conclusion, it can be stated that, in the analyzed case, by treating 2% of the water flow rate, it is possible to keep the properties of the water of the entire system constant and to significantly reduce, if not completely eliminate, the blowdown discharge.

The invention makes it possible to achieve numerous advantages, some of which have already been described.

The steel making plant with a direct cooling water treatment circuit according to the invention allows the water to be treated more efficiently by reducing the dissolved solids (TDS) and at the same time minimizing or eliminating the discharge of water (blowdown).

The steel making plant with a direct cooling water treatment circuit according to the invention is simple and inexpensive to manufacture.

The steel making plant with a direct cooling water treatment circuit according to the invention is simple and easy to manage.

The process for treating direct cooling water in a steel making plant according to the invention allows the water to be treated more efficiently by reducing the dissolved solids (TDS) and at the same time minimizing or eliminating the discharge of water (blowdown).

The introduction, in the steel industry, of direct cooling water treatment by means of an electrocoagulation system represents an advance in water conservation technology, offering significant commercial opportunities to steel producers. This system makes it possible to efficiently treat water, providing a sustainable solution which not only increases environmental responsibility but also produces significant economic advantages.

By applying the invention, substantial reductions in water usage can be achieved while at the same time improving the quality of the treated water. This results in tangible benefits, such as reduced costs for water supply and wastewater disposal and a reduced environmental impact.

Furthermore, the solution according to the invention, which is focused on the treatment circuit 100, can be easily integrated into existing plants through retrofitting interventions, providing a cost-effective solution for companies wishing to improve their sustainability initiatives. In particular, it is possible to exploit and enhance devices already present in the existing plant.

In conclusion, the solution according to the invention makes it possible to optimize water use and reduce operating costs.

The invention therefore makes it possible to:
- remove dissolved solids;
- treat a certain amount of water in order to reduce the blowdown (wastewater) to zero;
- maintain the maximum permitted water conductivity limit so as to keep the quality of the entire system constant;
- use electrical power instead of chemical substances for reducing dissolved solids;
- reduce OPEX;
- reduce maintenance requirements.

The present invention does not envisage operating on the blowdown itself, but rather envisages operating on the process water in an integrated manner with the pre-existing plant, in order to prevent the production of blowdown water and to keep the TDS within the limits required to maintain constant water characteristics and to provide benefits not only to the plants served by the cooling water, but also to the cooling circuit itself.

The invention is specifically applicable to the primary and secondary steel industry sectors.

The electrocoagulation treatment may be carried out on the entire circulating water flow or on a portion of the flow in a dedicated parallel branch.

According to a preferred embodiment, the treatment circuit is directly integrated into the pre-existing traditional plant and treats a portion of the water in a parallel branch provided with electrocoagulation EC, eliminating the need to regulate water quality by means of chemical dosing before or after EC. This constitutes a further operational difference with respect to the prior art. From an operational standpoint, the water treated by EC is reintroduced into the circuit and mixed with the process water, which is subsequently treated and filtered by the systems already present in the circuit. The sedimentation units allow the additional suspended solids introduced by electrocoagulation to settle, while the sand filters allow completion of the water purification. In this manner, the required balance and quality are achieved within the established limits. In summary, the process has been integrated and improved by proposing electrocoagulation in parallel as new equipment, exploiting the existing equipment to treat the process water, maintain the balance and prevent system blowdown.

The invention as conceived therefore achieves the intended aims.

Obviously, in its practical implementation it may also assume forms and configurations different from those illustrated above without thereby departing from the present scope of protection.

Moreover, all details may be replaced by technically equivalent elements and the dimensions, shapes and materials used may be any according to requirements.

## Claims

1. A steel making plant (1) comprising:
- at least one apparatus (10) provided with a direct water cooling system (11) which generates a cooling water flow (CW) containing dissolved solids; and
- a cooling water treatment circuit (100) which is fluidly connected to said direct water cooling system (11) and is suitable to treat said cooling water flow (CW) so as to recirculate a recirculating water flow (RW) to said direct cooling system (11) having a concentration of said dissolved solids below a predefined limit,
wherein said cooling water treatment circuit (100) in turn comprises:
- at least one mechanical separation unit (110, 130, 1100) suitable to separate the solids contained therein from the cooling water flow (CW), generating a sludge flow (S);
- a cooling unit (120) which is fluidically connected to said direct water cooling system (11) by means of a return conduit (101b) which closes the circuit as a loop;
**characterized in that** said cooling water treatment circuit (100) further comprises at least one electrocoagulation system (1000) which is suitable to treat at least one part of said cooling water flow (CW) so as to facilitate the separation of said dissolved solids from the water in the form of flocs and/or clots separable by said at least one mechanical separation unit (110, 130, 1100), thereby lowering the concentration of dissolved solids in the cooling water flow (CW).

2. A steel making plant (1) according to claim 1, wherein said cooling water treatment circuit (100) comprises two mechanical separation units (110, 1100), wherein:
- a first mechanical separation unit is defined by a mechanical filtration unit (110) and is placed downstream of said direct water cooling system (11), preferably consisting of a set of sand filters,
- a second mechanical separation unit is defined by a sedimentation unit (1100) suitable to treat the water flow exiting directly from said electrocoagulation system (1000) to generate in turn a sludge flow (S) and a treated water flow (TW) with a lower concentration of dissolved solids than the cooling water flow (CW), said treated water flow (TW) defining said recirculating water flow (RW) in whole or in part,
wherein said cooling unit (120) is arranged downstream of said mechanical filtration unit (110).

3. A steel making plant (1) according to claim 2, wherein said electrocoagulation system (1000) and said sedimentation unit (1100) are installed in a by-pass branch (102) connected in parallel to a section of the treatment circuit (100) downstream of said direct water cooling system (11) and upstream of said mechanical filtration unit (110), and wherein preferably said treatment circuit (100) comprises a water collection tank (1200) arranged immediately upstream of said electrocoagulation system (1000) having the function of a buffer.

4. A steel making plant (1) according to claim 2, wherein said electrocoagulation system (1000) and said sedimentation unit (1100) are installed in a first recirculation branch (103) which fluidically connects said return conduit (101b) downstream of said cooling unit (120) and upstream of said direct water cooling system (11) at a more upstream point of the treatment circuit, and wherein preferably said treatment circuit (100) comprises a water collection tank (1200) arranged immediately upstream of said electrocoagulation system (1000) having the function of a buffer.

5. A steel making plant (1) according to any one of claims 2 to 4, wherein said sedimentation unit (1100) is a lamella clarifier.

6. A steel making plant (1) according to claim 1, wherein said cooling water treatment circuit (100) comprises two mechanical separation units (110, 130), wherein:
- a first mechanical separation unit is defined by a mechanical filtration unit (110) and is placed downstream of said direct water cooling system (11), preferably consisting of a set of sand filters,
- a second mechanical separation unit is defined by a sedimentation basin (130), preferably of longitudinal type, which is installed downstream of said direct water cooling system (11) and upstream of said mechanical filtration unit (110),
wherein said cooling unit (120) is arranged downstream of said mechanical filtration unit (110).

7. A steel making plant (1) according to claim 6, wherein said electrocoagulation system (1000) is connected in series to said cooling water treatment circuit (100) to treat all the water flow circulating in said circuit, downstream of said direct water cooling system (11) and upstream of said sedimentation basin (130) and wherein preferably said electrocoagulation system (1000) is installed in an inlet section of said sedimentation basin (130).

8. A steel making plant (1) according to claim 6, wherein said electrocoagulation system (1000) is installed in a by-pass branch (104; 105) connected in parallel to said cooling water treatment circuit (100) for treating a predefined flow rate of the water circulating in said circuit, and wherein:
- said by-pass branch (104) is connected in parallel to a section of the circuit downstream of said direct water cooling system (11) and upstream of said sedimentation basin (130); or
- said by-pass branch (105) is connected in parallel to said sedimentation basin (130) to treat a water flow exiting said sedimentation basin (130) and recirculate it to the basin itself,
and wherein preferably said treatment circuit (100) comprises a water collection tank (1200) arranged immediately upstream of said electrocoagulation system (1000) having the function of a buffer.

9. A steel making plant (1) according to claim 6, wherein said cooling water treatment circuit (100) comprises three mechanical separation units (110, 130, 1100), wherein:
- a first mechanical separation unit is defined by a mechanical filtration unit (110) and is placed downstream of said direct water cooling system (11), preferably consisting of a set of sand filters,
- a second mechanical separation unit is defined by a sedimentation basin (130), preferably of longitudinal type, which is installed downstream of said direct water cooling system (11) and upstream of said mechanical filtration unit (110),
- a third mechanical separation unit is defined by a sedimentation unit (1100) suitable to treat the water flow in output directly from said electrocoagulation system (1000) to generate in turn a sludge flow (S) and a treated water flow (TW) with a lower concentration of dissolved solids than the cooling water flow (CW), said treated water flow (TW) partly defining said recirculating water flow (RW),
wherein said cooling unit (120) is arranged downstream of said mechanical filtration unit (110),
wherein said electrocoagulation system (1000) and said sedimentation unit (1100) are installed in a first recirculation branch (106) which fluidly connects said return conduit (101b) downstream of said cooling unit (120) and upstream of said direct water cooling system (11) at a more upstream point of the treatment circuit, and wherein preferably said sedimentation unit (1100) is a lamella clarifier.

10. A steel making plant (1) according to claim 8 or 9, wherein said treatment circuit (100) comprises a water collection tank (1200) arranged immediately upstream of said electrocoagulation system (1000) having the function of a buffer.

11. A steel making plant (1) according to any one of claims 6 to 10, wherein said cooling water treatment circuit (100) further comprises a scale sedimentation tank (140) which is installed downstream of said direct water cooling system (11) and upstream of both said sedimentation basin (130) and said electrocoagulation system (1000).

12. A steel making plant (1) according to any one of the preceding claims, wherein said cooling unit (120) consists of at least one evaporative tower, provided with at least one cooled water collection tank (121), which is fluidically connected at the outlet to said direct water cooling system (11) by means of said return conduit (101b).

13. A steel making plant (1) according to claim 12, when dependent on claim 4 or 10, wherein the most upstream point at which said first recirculation branch (103; 106) is connected is said cooled water collection tank (121).

14. A steel making plant (1) according to any one of the preceding claims, wherein said treatment circuit (100) comprises:
- a water replenishment conduit (107) fluidically connected to a water mains; and
- a reverse osmosis treatment unit (150) which is fluidically connected to said water replenishment conduit (107).

15. A steel making plant (1) according to claim 14, when dependent on claim 12, wherein said water replenishment conduit (107) is fluidically connected to the cooled water collection tank (121) of said evaporative tower (120).

16. A steel making plant (1) according to claim 15, wherein said return conduit (101b) is connected to said water replenishment conduit (107) upstream of said reverse osmosis treatment unit (150) by means of a recirculation branch (108).

17. A steel making plant (1) according to claim 15, when dependent on claim 13, wherein downstream of said electrocoagulation system (1000) and said sedimentation unit (1100), said first recirculation branch (103; 106) is connected by means of a second recirculation branch (109) to said water replenishment conduit (107) upstream of said reverse osmosis treatment unit (150).

18. A steel making plant (1) according to any one of the preceding claims, when dependent on claim 4 or 10, wherein said mechanical filtration unit (110) is installed in a by-pass branch (111) which is connected in parallel to the treatment circuit (100) in a section of the treatment circuit (100) downstream of said direct water cooling system (11) and upstream of said cooling unit (120).

19. A process for treating direct cooling water in a steel making plant (1) comprising at least one apparatus (10) provided with a direct water cooling system which generates a cooling water flow containing dissolved solids, said process comprising the following operating steps:
a) treating said cooling water flow in a cooling water treatment circuit (100) to lower the concentration of said dissolved solids below a predefined limit, generating a treated water flow; and
b) recirculating said treated water flow to said direct water cooling system,
**characterized in that** said treatment step a) envisages that:
- at least part of said cooling water flow is subjected to an electrocoagulation treatment so as to facilitate the separation of said dissolved solids from the water; and
- the water flow is subjected to sedimentation to allow the dissolved solids being separated from the water to be removed from the water flow, thereby lowering the concentration of dissolved solids from the water and reducing the need to bleed the treatment circuit, extracting a blowdown flow from the circuit [to lead to the formation of insoluble metal hydroxides resulting from the combination of Men+ metal ions released into the water by the oxidation of a metal anode and OH- ions generated by the reduction of the water to a cathode electrically connected to the anode, wherein said insoluble metal hydroxides precipitate forming sludge and trap the dissolved solids in the water, lowering the concentration thereof in the water].

20. A process according to claim 19, wherein said treatment step a) envisages that before or after the electrocoagulation treatment, said cooling water flow is subjected to:
- mechanical filtration, preferably by means of a sand filter;
- cooling, preferably by means of an evaporative tower.

21. A process according to claim 20, wherein said treatment step a) further envisages that before or after the electrocoagulation treatment, said cooling water flow is subjected to sedimentation to allow the separation of the suspended solids.

22. A process according to claim 21, wherein said treatment step a) further envisages that before or after the electrocoagulation treatment, said cooling water flow is subjected to sedimentation to allow the separation of course suspended solids.

23. A process according to claim 19, 20, 21 or 22, wherein said treatment step a) envisages that at least part of the water flow subjected to the electrocoagulation treatment is subjected to a reverse osmosis treatment, thereby substantially eliminating the concentration of dissolved solids from the water and avoiding the need to bleed the treatment circuit.

24. A process according to any one of claims 19 to 20, wherein the steel making plant is a steel making plant (1) according to any one of claims 1 to 18.
